# EUROPÄISCHE PATENTANMELDUNG

(11) **EP 1 256 468 A2**
(43) Veröffentlichungstag der Anmeldung: **13.11.2002**
(21) Anmeldenummer: 02010094.7
(22) Anmeldetag: 07.05.2002
(51) Int. Cl.: B60G 21/05, B60B 35/02

(54) **Verbundlenkerachse und Verfahren zur Herstellung eines Querträgers**

(30) Priorität: 11.05.2001 DE 10122998
(71) Anmelder: Benteler Automobiltechnik GmbH & Co. KG, 33104 Paderborn (DE)
(72) Erfinder: Etzold, Dieter, 33813 Oerlingshausen (DE); Hoffmann, Karsten, 33189 Schlangen (DE)
(74) Vertreter: Ksoll, Peter, Dr.-Ing.

(57) **Zusammenfassung**

Die Erfindung betrifft eine Verbundlenkerachse für Kraftfahrzeuge und ein Verfahren zur Herstellung eines Querträgers 4 hierfür. Die Verbundlenkerachse umfasst zwei durch einen Querträger 4 verbundene Längslenker, wobei der Querträger 4 aus einem Profil besteht mit einem einlagigen bereichsweise offenen Mittelabschnitt 5, an den sich beidseitig rohrförmig geschlossene Enden 6, 7 anschließen. Zur Herstellung des Querträgers 4 wird zunächst eine ebene Platine gefertigt, deren Geometrie der Abwicklung eines Querträgers 4 entspricht. Anschließend wird die Platine rohrförmig umgeformt und entlang der aneinander liegenden Längskanten 12, 13 gefügt. Auf diese Weise weist der Querträger 4 in seinen Enden 6, 7 einen rohrförmig geschlossenen Querschnitt auf, wohingegen er im Mittelabschnitt 5 einen V-oder U-förmigen offenen Querschnitt besitzt.

## Beschreibung

Die Erfindung betrifft eine Verbundlenkerachse für Kraftfahrzeuge und ein Verfahren zur Herstellung eines Querträgers hierfür.

Verbundlenkerachsen kombinieren die Vorteile eines einfachen Aufbaus bei geringem Raumbedarf und guten kinematischen Eigenschaften. Der die beiden seitlichen Längslenker verbindende Querträger wirkt als Torsionsprofil, so dass sich bei gleichzeitigem Einfedern eine Längslenkercharakteristik und bei wechselseitigem Einfedern eine Schräglenkercharakteristik ergibt.

Es sind diverse Vorschläge bekannt, wie der Querträger einer Verbundlenkerachse ausgestaltet sein soll, um diesen auf der einen Seite biegesteif, auf der anderen Seite aber auch ausreichend torsionsweich zu gestalten. Aus der DE 44 16 725 A1 geht beispielsweise eine Verbundlenkerachse hervor, mit zwei radtragenden elastisch am Aufbau angelenkten und starren Längslenkern, die durch einen biegesteifen aber torsionsweichen Querträger miteinander verschweißt sind. Der Querträger besteht über die gesamte Länge aus einem Rohrprofil, das an beiden Enden einen torsionssteifen Querschnitt und im mittleren Bereich einen torsionsweichen U-, V-, L-, X- oder ähnlichen Querschnitt mit mindestens einem doppelwandigen Profilschenkel aufweist.

Im Umfang der FR 2 654 987 A1 ist eine Verbundlenkerachse bekannt, die ebenfalls einen im Querschnitt V-förmigen Querträger aufweist. Der Querträger ist über U-förmige Übergangsstücke mit den Längslenkern verschweißt.

Durch das DE 297 20 207 U1 gehört eine Verbundlenkerachse zum Stand der Technik mit einem V-förmigen Querträger, dessen Scheitel nach oben weist. Die Schenkel sind schräg nach unten gerichtet. In den Übergangsbereichen vom Querträger auf die Längslenker sind Knotenbleche eingeschweißt, die sich vom Querträger aus in Richtung zu endseitig der Längslenker vorgesehenen Radträgern erstrecken.

Eine derartige Verbundlenkerachse besitzt eine hohe Steifigkeit gegenüber lateral auf die Längslenker wirkenden Kräften. Das Einschweißen der Knotenbleche zwischen Querträger und die Längslenker führt jedoch zu einem erhöhten Fertigungsaufwand.

Da im Automobilbau zwecks Steigerung der Produktivität ein generelles Bestreben nach einer möglichst wirtschaftlichen und rationellen Herstellung der Kraftfahrzeugkomponenten bei gleichzeitiger Steigerung der Qualität der Produkte besteht, liegt der Erfindung ausgehend vom Stand der Technik die Aufgabe zugrunde, eine Verbundlenkerachse unter Gewährleistung einer hohen Leistungsfähigkeit effizienter zu gestalten und ein Verfahren zur Herstellung eines Querträgers für eine Verbundlenkerachse aufzuzeigen.

Die Lösung des gegenständlichen Teils dieser Aufgabe besteht nach der Erfindung in einer Verbundlenkerachse gemäß Patentanspruch 1. Danach weist die Verbundlenkerachse zwei durch einen Querträger verbundenen Längslenker auf, wobei der Querträger aus einem Profil besteht mit einem einlagigen, bereichsweise offenen Mittelabschnitt, an den sich beidseitig rohrförmig geschlossene Enden anschließen. Die Enden können rund oder oval gestaltet sein.

Der Querträger ist insgesamt rohrartig gestaltet, jedoch im Mittelabschnitt bereichsweise offen. Insbesondere weist der Mittelabschnitt einen ovalen langgestreckten Ausschnitt auf (Patentanspruch 2). Bevorzugt besitzt der Mittelabschnitt zumindest auf dem überwiegenden Teil seiner Länge einen im wesentlichen V- oder U-förmigen Querschnitt, wie dies Patentanspruch 3 vorsieht. An den Längslenkern sind Aufnahmen für die Enden des Querträgers ausgebildet (Patentanspruch 4).

Die Gesamtkonfiguration der Verbundlenkerachse erreicht eine auf die dynamischen Belastungen abgestimmte Auslegung der Widerstandsmomente. Hierzu trägt auch der V- bzw. U-förmige Querschnitt im Mittelabschnitt des Querträgers bei. Es erfolgt eine effiziente Überleitung der Torsions- und Biegekräfte von den Längslenkern in den als Torsionsprofil wirkenden Querträger, in dem die Kräfte abgebaut bzw. kompensiert werden. Damit besitzt die erfindungsgemäße Verbundlenkerachse ein besonders gutes statisches und dynamisches Lastverhalten und erreicht eine hohe Lebensdauer.

Eine Steifigkeitsanpassung der Verbundlenkerachse kann je nach Fahrzeugtyp über eine Variation der Dicke des Querträgers vorgenommen werden. Bevorzugt erfolgt dies jedoch über eine Verdrehung des Querträgers. Da der Querschnitt der Enden vorzugsweise rund gestaltet ist, kann der Querträger ohne Änderungen des Bauteils beim Zusammenbau eine Verdrehung erfahren, um je nach Fahrzeugvariante die Fahreigenschaften zu verändern. Hiermit ist eine rotatorische Ausrichtung des Querträgers bzw. der mittig durch die Schenkel des Mittelabschnitts verlaufenden Mittellängsachse in Bezug auf die durch die Längslenker verlaufenden Längsachsen gemeint. Der besondere Vorteil dieser Maßnahme liegt in der großen Variationsbreite der Parameter bezüglich der Gravitationsachse des Querträgers zum Wankzentrum des Kraftfahrzeugs. Auf diese Art und Weise können die spezifischen Fahreigenschaften des Kraftfahrzeugs hinsichtlich der Rollsteifigkeit sowie der Verstellung von Spur und Sturz am Radflansch gezielt beeinflusst werden, ohne dass eine signifikante Bauteiländerung notwendig ist.

Die Lösung des verfahrensmäßigen Teils der Aufgabe besteht in einem Verfahren gemäß Patentanspruch 5. Zur Herstellung eines Querträgers wird zunächst eine ebene Platine gefertigt, deren Geometrie der Abwicklung eines Querträgers entspricht. Anschließend wird die Platine rohrförmig umgeformt und die dann aneinander liegenden Längskanten der Enden des Querträgers gefügt, vorzugsweise verschweißt.

Die Herstellung des Querträgers ist rationell und sehr gut zu automatisieren. Der Querträger ebenso wie die gesamte Verbundlenkerachse kann sowohl aus Stahl als auch aus Leichtmetall insbesondere Aluminium oder einer Kombination vorgenannter Werkstoffe hergestellt werden.

Im Mittelabschnitt ergeben sich offene Querschnitte in V- oder U-Formen. Um die Spannungen im Übergang vom offenen zum geschlossenen Querschnitt gering zu halten und eine hohe Lebensdauer zu erreichen, wird die Beschnittkontur in diesem kritischen Bereich entsprechend der zu erwartenden betrieblichen Belastung angepasst.

Die erfindungsgemäße Verbundlenkerachse bzw. deren Herstellung kommt mit wenigen Fertigungsschritten aus. Nachdem die Platine zum Rohr verschweißt ist, ist der Querträger fertig. Anschließend kann dieser endseitig mit den Längslenkern gefügt werden. Die Erfindung führt zur Einsparung von Kosten, da keine teuren Rohre als Halbzeuge eingesetzt werden müssen. Auch Einzelteile können eingespart werden, da beispielsweise zusätzliche Knoten- oder Übergangsbleche im Verbindungsbereich zu den Längslenkern entfallen.

Wie erwähnt, kann eine vorteilhafte Einstellung der Fahreigenschaften der Verbundlenkerachse in Abstimmung auf die Fahrzeugvariante erfolgen.

Die Erfindung ist nachfolgend anhand eines in den Zeichnungen dargestellten Ausführungsbeispiels näher beschrieben. Es zeigen:
- Figur 1: in einer schematischen perspektivischen Darstellung eine erfindungsgemäße Verbundlenkerachse;
- Figur 2: die perspektivische Darstellung eines Querträgers;
- Figur 3: den Querträger in der Seitenansicht und
- Figur 4: einen Schnitt durch die Darstellung der Figur 3 entlang der Linie IV-IV.

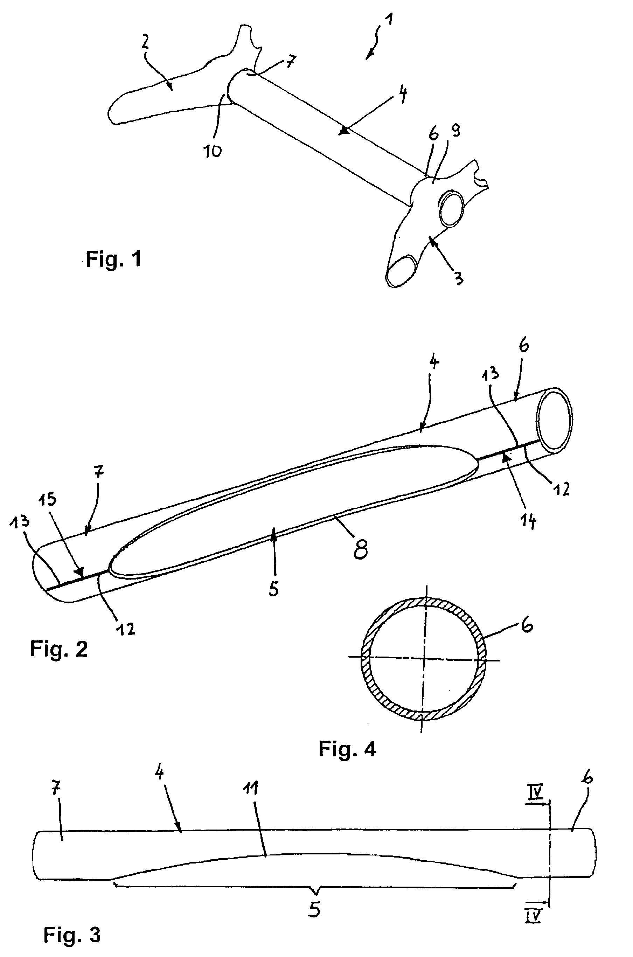

Die Figur 1 zeigt eine Verbundlenkerachse 1. Diese umfasst im wesentlichen zwei radführende Längslenker 2, 3 und einen die beiden Längslenker 2, 3 verbindenden Querträger 4. Anhand der Figur 2 erkennt man, dass der Querträger 4 aus einem Profil besteht mit einem einlagigen bereichsweise offenen Mittelabschnitt 5, an den sich jeweils beidseitig rohrförmig geschlossene Enden 6, 7 anschließen. Der Mittelabschnitt 5 weist einen ovalen langgestreckten Ausschnitt 8 auf. Hierdurch ergeben sich im Mittelabschnitt 5 offene Querschnitte in V- bzw. U-förmiger Konfiguration. An den Längslenkern 2, 3 sind geeignete Aufnahmen 9, 10 für die Enden 6, 7 des Querträgers 4 ausgebildet. In den Aufnahmen 9, 10 sind die Enden 6, 7 eingepasst und gefügt, in der Regel verschweißt. Hierdurch ist eine gute Kraftübertragung von den Längslenkern 2, 3 in den Querträger 4 gewährleistet.

Zur Herstellung des Querträgers 4 wird eine Ausgangsplatine aus Metall, beispielsweise Stahl, Aluminium oder einem anderen metallischen Werkstoff bereitgestellt. Diese erhält einen Blechbeschnitt, so dass ihre Umfangsgeometrie der Abwicklung des Querträgers 4 entspricht. Im Grunde genommen ist die Abwicklung rechteckig, wobei an den Längskanten bogenförmig verlaufende Schnitte 11 vorhanden sind. Die Kontur erkennt man in der Figur 3. Anschließend wird die beschnittene Platine rohrförmig umgeformt und die an den Enden 6, 7 aneinanderliegenden Längskanten 12, 13 miteinander verschweißt. Die Schweißnähte sind in der Figur 2 mit 14, 15 gekennzeichnet.

Die Enden 6, 7 weisen einen runden geschlossenen Querschnitt auf, wie die Figur 4 verdeutlicht. Im Mittelabschnitt 5 besitzt der Querträger 4 hingegen einen V- oder U-förmigen offenen Querschnitt.

### Bezugszeichenaufstellung:

- 1 -: Verbundlenkerachse
- 2 -: Längslenker
- 3 -: Längslenker
- 4 -: Querträger
- 5 -: Mittelabschnitt
- 6 -: Ende von 4
- 7 -: Ende von 4
- 8 -: Ausschnitt
- 9 -: Aufnahme
- 10 -: Aufnahme
- 11 -: Schnitt
- 12 -: Längskante
- 13-: Längskante
- 14 -: Schweißnaht
- 15 -: Schweißnaht

## Patentansprüche

1. Verbundlenkerachse für Kraftfahrzeuge, welche zwei durch einen Querträger (4) verbundene Längslenker (2, 3) umfasst, **dadurch gekennzeichnet, dass** der Querträger (4) aus einem Profil besteht, mit einem einlagigen, bereichsweise offenen Mittelabschnitt (5) an den sich beidseitig rohrförmig geschlossene Enden ( ) anschließen.

2. Verbundlenkerachse nach Anspruch 1, **dadurch gekennzeichnet, dass** der Mittelabschnitt (5) einen ovalen langgestreckten Ausschnitt ( ) aufweist.

3. Verbundlenkerachse nach Anspruch 1 oder 2, **dadurch gekennzeichnet, dass** der Mittelabschnitt (5) zumindest auf dem überwiegenden Teil seiner Länge einen im wesentlichen V-oder U- förmigen Querschnitt besitzt.

4. Verbundlenkerachse nach einem der Ansprüche 1 bis 3, **dadurch gekennzeichnet, dass** an den Längslenkern (2, 3) Aufnahmen (9, 10) für die Enden (6, 7) des Querträgers (4) ausgebildet sind.

5. Verfahren zur Herstellung des Querträgers ( ) für eine Verbundlenkerachse gemäß einem der Ansprüche 1 bis 3, **dadurch gekennzeichnet, dass** zunächst eine ebene Platine gefertigt wird, deren Geometrie der Abwicklung eines Querträgers (4) entspricht, anschließend die Platine rohrförmig umgeformt und entlang der aneinanderliegenden Längskanten (12, 13) gefügt wird.
